# EUROPÄISCHE PATENTSCHRIFT

(11) **EP 3 844 410 B1**
(45) Veröffentlichungstag und Bekanntmachung des Hinweises auf die Patenterteilung: **04.10.2023**
(21) Anmeldenummer: 19749700.1
(22) Anmeldetag: 01.08.2019
(51) Int. Cl.: F16C 17/10, F16C 43/02, F16C 33/04, F03D 80/70, F16C 33/10, F16C 17/06, F16C 17/03

(54) **LAGERANORDNUNG EINES ROTORS EINER WINDKRAFTANLAGE**
BEARING ARRANGEMENT VOR THE ROTOR OF A WIND TURBINE
ENSEMBLE DE PALIERS POUR LE ROTOR D'UNE EOLIENNE

(30) Priorität: 27.08.2018 DE 102018120806
(43) Veröffentlichungstag der Anmeldung: 07.07.2021
(73) Patentinhaber: RENK GmbH, 86159 Augsburg (DE)
(72) Erfinder: ROHRMANN, Thorsten, 38271 Binder (DE); WINTER, Lutz, 30880 Laatzen (DE); BRENCHER, Janina, 30629 Hannover (DE); DECKER, Peter, 30163 Hannover (DE)
(74) Vertreter: Lelgemann, Karl-Heinz
(86) Internationale Anmeldenummer: PCT/EP2019/070771
(87) Internationale Veröffentlichungsnummer: WO 2020/043421

(56) Entgegenhaltungen:
- EP-A1- 3 219 984
- WO-A1-2018/071941

## Beschreibung

Die Erfindung betrifft eine Lageranordnung eines Rotors einer Windkraftanlage.

Zur Lagerung eines Rotors einer Windkraftanlage, der mit Rotorblättern der Windkraftanlage gekoppelt ist und von den Rotorblättern der Windkraftanlage angetrieben ist, kommen nach der Praxis bislang ausschließlich Wälzlager zum Einsatz. Im Schadensfall des Wälzlagers muss der komplette Triebstrang zerlegt werden. Dies macht in den meisten Fällen eine komplette Demontage der Windkraftanlage erforderlich.

Aus der WO 2011/127510 ist eine Lageranordnung eines Rotors einer Windkraftanlage bekannt, der Gleitlager nutzt. Die Lageranordnung verfügt über zumindest zwei in axialem Abstand zueinander angeordnete Gleitlager, die aus Gleitlager-Pads zusammengesetzt sind, wobei die Gleitlager in winklig zueinander stehenden Ebenen angeordnet sind. Die Gleitlager-Pads der Gleitlager, die Gleitlagersegmente bereitstellen, sind auf einer verkippten Laufbahn positioniert, wodurch eine sphärische Form der jeweiligen Gleitfläche erforderlich wird. Eine derartige sphärische Form der jeweiligen Gleitlagerfläche kann nur mit hohem Aufwand hergestellt werden. Darüber hinaus ist bisher kein validiertes hydrodynamisches Simulationstool bekannt, mit der eine solche Lageranordnung ausgelegt werden kann. EP 3 219 984 A1 offenbart eine gattungsgemäße Lageranordnung.

Es besteht Bedarf an einer Lageranordnung eines Rotors einer Windkraftanlage, die einerseits einfach hergestellt werden kann und andererseits im Schadensfall nicht die komplette Demontage der Windkraftanlage erfordert.

Hiervon ausgehend liegt der vorliegenden Erfindung die Aufgabe zugrunde, eine neuartige Lageranordnung eines Rotors einer Windkraftanlage zu schaffen.

Diese Aufgabe wird durch eine Lageranordnung nach Anspruch 1 gelöst. Die erfindungsgemäße Lageranordnung zur Lagerung des Rotors der Windkraftanlage in einem feststehenden Gehäuse der Windkraftanlage weist zumindest folgende Baugruppen auf: Erstens rotorseitige Axial-Gleitlagersegmente, die an dem Rotor angreifen, zusammen mit dem Rotor rotieren und sich gegen eine Gleitfläche des Gehäuses abstützen. Zweitens gehäuseseitige Axial-Gleitlagersegmente, die an dem Gehäuse angreifen, zusammen mit dem Gehäuse feststehen und sich gegen eine erste Gleitfläche des Rotors abstützen. Drittens gehäuseseitige Radial-Gleitlagersegmente, die an dem Gehäuse angreifen, zusammen mit dem Gehäuse feststehen und sich gegen eine zweite Gleitfläche des Rotors abstützen. Die Axial-Gleitlagersegmente umfassen rotorseitige Axial-Gleitlagersegmente und gehäuseseitige Axial-Gleitlagersegmente. Die Axial-Gleitlagersegmente stützen sich an Axial-Gleitflächen ab, nämlich die rotorseitigen Axial-Gleitlagersegmente an einer axialen Fläche des Gehäuses und die gehäuseseitigen Axial-Gleitlagersegmente an einer axialen Fläche des Rotors. Die gehäuseseitigen Radial-Gleitlagersegmente stützen sich an einer Radialfläche bzw. Umfangsfläche des Rotors ab. Im Schadensfall der Lageranordnung kann auf die einzelnen Gleitlagersegmente individuell zugegriffen werden, wodurch es nicht erforderlich ist, den gesamten Triebstrang bzw. die gesamte Windkraftanlage zu zerlegen. Eine sphärische Form von Gleitflächen ist nicht erforderlich. Die Lageranordnung kann einfach hergestellt werden.

Erfindungsgemäß weist die Lageranordnung einen eine rotorseitige Spurscheibe ausbildenden, radialen Vorsprung des Rotors auf, der fest mit einer Nabe oder Welle des Rotors verbunden ist, wobei die rotorseitigen Axial-Gleitlagersegmente an diesem radialen Vorsprung befestigt sind. Die gehäuseseitigen Axial-Gleitlagersegmente stützen sich gegen die rotorseitige Spurscheibe ab. Die gehäuseseitigen Radial-Gleitlagersegmente stützen sich gegen die Nabe oder Welle des Rotors ab. Dies erlaubt eine einfache Herstellung der Lageranordnung. Im Schadensfall kann auf einzelne Gleitlagersegmente individuell zugegriffen werden.

Nach einer vorteilhaften Weiterbildung der Erfindung weist die Lageranordnung eine gehäuseseitige Segmenthalterung auf, die sowohl die gehäuseseitigen Axial-Gleitlagersegmente als auch die gehäuseseitigen Radial-Gleitlagersegmente aufnimmt, wobei die Segmenthalterung an dem Gehäuse lösbar befestigt ist. Vorzugsweise ist die Segmenthalterung segmentiert, wobei jedes Segment der Segmenthalterung mindestens ein gehäuseseitiges Axial-Gleitlagersegment und mindestens ein gehäuseseitiges Radial-Gleitlagersegment aufnimmt.

Die Segmenthalterung dient der einfachen Aufnahme der gehäuseseitigen Gleitlagersegmente. Dann, wenn auch die Segmenthalterung segmentiert ist, kann besonders vorteilhaft auf einzelne Gleitlagersegmente im Schadensfall zugegriffen werden, nämlich auf die an dem jeweiligen Segment der Segmenthalterung befestigten gehäuseseitigen Gleitlagersegmente.

Nach einer vorteilhaften Weiterbildung der Erfindung ist zum Ausbau eines gehäuseseitigen Axial-Gleitlagersegments zunächst dasjenige gehäuseseitige Radial-Gleitlagersegment, das zusammen mit dem auszubauenden gehäuseseitigen Axial-Gleitlagersegment an demselben Segment der Segmenthalterung montiert ist, vom jeweiligen Segment der Segmenthalterung demontierbar ist, wobei anschließend das jeweilige Segment der Segmenthalterung vom Gehäuse demontierbar und zusammen mit dem auszubauenden gehäuseseitigen Axial-Gleitlagersegment ausbaubar ist. Dies erlaubt einen einfachen und vorteilhaften Zugriff auf die gehäuseseitigen Gleitlagersegmente.

Vorzugsweise ist an dem Gehäuse eine Einfädelöffnung für die rotorseitigen Axial-Gleitlagersegmente ausgebildet, über welche die rotorseitigen Axial-Gleitlagersegmente montierbar und demontierbar sind. Die Einfädelöffnung erlaubt einen einfachen und individuellen Zugriff auf die einzelnen rotorseitigen Axial-Gleitlagersegmente.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer erfindungsgemäßen Lageranordnung eines Rotors einer Windkraftanlage;
- Fig. 2: einen ersten Querschnitt durch die Lageranordnung der Fig. 1;
- Fig. 3: einen zweiten Querschnitt durch die Lageranordnung der Fig. 1;
- Fig. 4a: den Querschnitt der Fig. 2 mit ersten Kraftpfeilen;
- Fig. 4b: den Querschnitt der Fig. 2 mit zweiten Kraftpfeilen;
- Fig. 5: mehrere Querschnitte durch die Lageranordnung analog Fig. 2 zur Verdeutlichung des Zugriffs auf einzelne Segmente der Lageranordnung;
- Fig. 6: mehrere Seitenansichten der Lageranordnung zur weiteren Verdeutlichung des Zugriffs auf einzelne Segmente der Lageranordnung.

Die Erfindung betrifft eine Lageranordnung eines Rotors einer Windkraftanlage, der mit Rotorblättern gekoppelt ist. Ein solcher Rotor der Windkraftanlage wird auch als Hauptrotor der Windkraftanlage bezeichnet.

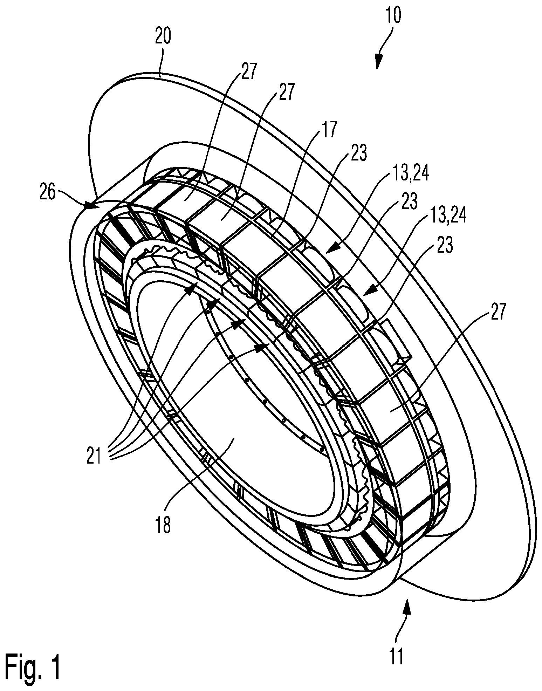

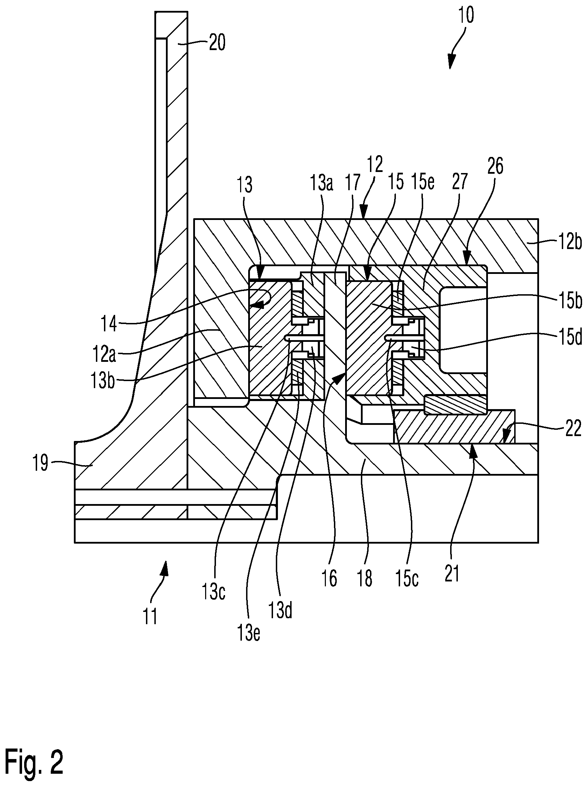

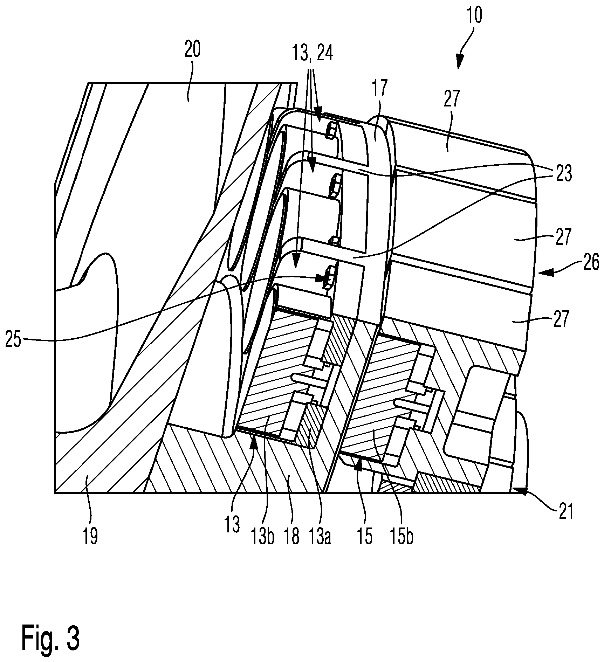

Fig. 1 zeigt eine perspektivische Ansicht einer erfindungsgemäßen Lageranordnung eines Rotors einer Windkraftanlage. Fig. 2 und 3 zeigen ausschnittsweise Querschnitte durch die Lageranordnung 10, und zwar Fig. 3 einen perspektivischen ausschnittsweisen Querschnitt.

Die Lageranordnung 10 der Fig. 1, 2 und 3, die der Lagerung des Rotors 11 der Windkraftanlage in dem feststehenden Gehäuse 12 derselben dient, verfügt über mehrere Gleitlagersegmente.

So verfügt die Lageranordnung 10 über rotorseitige Axial-Gleitlagersegmente 13.

Die rotorseitige Axial-Gleitlagersegmente 13 greifen an dem Rotor 11 an bzw. sind an dem Rotor 11 befestigt, rotieren zusammen mit dem Rotor 11 und stützen sich gegen das Gehäuse 12 ab, und zwar gegen eine Axial-Gleitfläche 14 des Gehäuses 12, die an einem sich in Radialrichtung erstreckenden Gehäuseabschnitt 12a des Gehäuses 12 ausgebildet ist.

Zusätzlich zu diesen rotorseitigen Axial-Gleitlagersegmenten 13 verfügt die Lageranordnung 10 über gehäuseseitige Axial-Gleitlagersegmente 15.

Die gehäuseseitigen Axial-Gleitlagersegmente 15 greifen an dem Gehäuse 12 an bzw. sind an dem Gehäuse 12 befestigt, und zwar an einem sich in Axialrichtung erstreckenden Gehäuseabschnitt 12b. Diese gehäuseseitigen Axial-Gleitlagersegmente 15 stützen sich am Rotor 11 ab, nämlich gegen eine Axial-Gleitfläche 16 des Rotors 11, die von einem radialen Vorsprung 17 des Rotors 11 gebildet ist, wobei der Vorsprung 17 integraler Bestandteil einer Welle 18 des Rotors 11 ist. Ausgehend von der Welle 18 erstreckt sich der radiale Vorsprung 17 nach radial außen sowie in Umfangsrichtung um die Welle 18 herum. An der Welle 18 greift eine Nabe 19 des Rotors 11 an, an der Rotorblätter 20 angreifen.

Zusätzlich zu den rotorseitigen Axial-Gleitlagersegmenten 13 und den gehäuseseitigen Axial-Gleitlagersegmenten 15 verfügt die Lageranordnung 10 über gehäuseseitige Radial-Gleitlagersegmente 21.

Diese gehäuseseitigen Radial-Gleitlagersegmente 21 greifen wiederum am Gehäuse 12 an bzw. sind mit dem Gehäuse 12 verbunden, wobei sich die gehäuseseitigen Radial-Gleitlagersegmente 21 wiederum am Rotor 11 abstützen, und zwar an einer Umfangs-Gleitfläche 22 des Rotors 11, die von der Welle 18 des Rotors 11 definiert ist.

Die erfindungsgemäße Lageranordnung 10 verfügt demnach zumindest über die rotorseitigen Axial-Gleitlagersegmente 13, die gehäuseseitigen Axial-Gleitlagersegmente 15 sowie die gehäuseseitigen Radial-Gleitlagersegmente 21, wobei sich die Axial-Gleitlagersegmente 13, 15 an Axial-Gleitflächen 14, 16, die senkrecht zur Radialrichtung des Rotors 11 verlaufen, abstützen, wohingegen sich die Radial-Gleitlagersegmente 21 an einer Umfangs-Gleitfläche 21 des Rotors 11 abstützen. Eine sphärische Form der Gleitflächen ist bei der erfindungsgemäßen Lageranordnung nicht vorgesehen.

Der radiale Vorsprung 17 der Welle 18 des Rotors 11, an dem sich die gehäuseseitigen Axial-Gleitlagersegmente 15 abstützen, bildet eine rotorseitige Spurscheibe aus. An dieser rotorseitigen Spurscheibe 17 bzw. dem radialen Vorsprung 17 sind axiale Vorsprünge 23 (siehe insbesondere Fig. 3) ausgebildet, die Aufnahmetaschen 24 für die rotorseitigen Axial-Gleitlagersegmente 13 definieren. Über den Umfang sind mehrere derartige Aufnahmetaschen 24 ausgebildet, wobei in jeder dieser Aufnahmetaschen 24 ein rotorseitiges Axial-Gleitlagersegment 13 angeordnet sind.

Die rotorseitigen Axial-Gleitlagersegmente 13 sind dabei mit dem Rotor 11 verbunden, und zwar mit dem Vorsprung bzw. mit der Spurscheibe 17, und zwar gemäß Fig. 3 über entsprechende Befestigungsschrauben 25.

Gegenüberliegend zu der Seite der Spurscheibe 17, an welcher die rotorseitigen Axial-Gleitlagersegmente 13 mit der Spurscheibe 17 des Rotors 11 verbunden sind, bildet die Spurscheibe 17 die Axial-Gleitfläche 16 aus, an welcher sich die gehäuseseitigen Axial-Gleitlagersegmente 15 abstützen.

Die rotorseitigen Axial-Gleitlagersegmente 13 verfügen über eine Halterung 13a, in welcher der eigentliche Gleitkörper 13b aufgenommen ist.

Der jeweilige Gleitkörper 13b ist in Halterung 13a über eine Schraube 13c montiert, die sich durch einen Deckel 13d der Halterung 13a hindurch in den Gleitkörper 13b hinein erstreckt. Zwischen dem Gleitlager 13b und der Halterung 13a ist dabei eine Tellerfeder 13e angeordnet.

Zur Montage bzw. Befestigung der gehäuseseitigen Gleitlagersegmente 15 und 21, nämlich der gehäuseseitigen Axial-Gleitlagersegmente 15 und der gehäuseseitigen Radial-Gleitlagersegmente 21, am Gehäuseabschnitt 12b des Gehäuses 12 dient eine gehäuseseitige Segmenthalterung 26. Diese gehäuseseitige Segmenthalterung 26 ist dabei vorzugsweise segmentiert und umfasst mehrere Segmente 27.

Jedes Segment 27 der Segmenthalterung 26 ist über nicht gezeigte Befestigungsmittel mit dem Gehäuse 12 verbunden bzw. am Gehäuse 12 befestigt. An jedem Segment 27 der gehäuseseitigen Segmenthalterung 26 ist mindestens ein gehäuseseitiges Axial-Gleitlagersegment 15 und mindestens ein gehäuseseitiges Radial-Gleitlagersegment 21 lösbar befestigt. Diese lösbare Befestigung der gehäuseseitigen Gleitlagersegmente 15, 21 am jeweiligen Segment 27 der Segmenthalterung 26 erfolgt wiederum über nicht gezeigte Befestigungseinrichtungen.

Im gezeigten, bevorzugten Ausführungsbeispiel ist am jeweiligen Segment 27 der Segmenthalterung 26 ein einziges gehäuseseitiges Axial-Gleitlagersegment 15 und ein einziges gehäuseseitiges Radial-Gleitlagersegment 21 befestigt. Im Unterschied hierzu ist es auch möglich, dass an jedem Segment 27 der Segmenthalterung 26 jeweils mehrere gehäuseseitige Axial-Gleitlagersegmente 15 sowie mehrere gehäuseseitige Radial-Gleitlagersegmente 21 befestigt sind, wobei dann vorzugsweise die Anzahl der am jeweiligen Segment 27 der Segmenthalterung 26 aufgenommenen gehäuseseitigen Axial-Gleitlagersegmente 15 der Anzahl der am jeweiligen Segment 27 der Segmenthalterung 26 aufgenommenen Radial-Gleitlagersegmente entspricht.

Ferner ist es im Unterschied hierzu möglich, dass die Anzahl der am jeweiligen Segment 27 der Segmenthalterung 26 aufgenommen gehäuseseitigen Axial-Gleitlagersegmente 15 von der Anzahl der am jeweiligen Segment 27 der Segmenthalterung 26 aufgenommenen gehäuseseitigen Radial-Gleitlagersegmente abweicht, wobei in einer ersten Variante vorgesehen sein kann, dass an dem jeweiligen Segment 27 insbesondere zwei gehäuseseitige Axial-Gleitlagersegmente 15 und ein einziges gehäuseseitiges Radial-Gleitlagersegment 21 oder nach einer zweiten Variante ein einziges gehäuseseitiges Axial-Gleitlagersegment 15 und zwei gehäuseseitige Radial-Gleitlagersegmente 21 aufgenommen sind.

Jedes der gehäuseseitigen Axial-Gleitlagersegmente 15 verfügt ebenso wie jedes der rotorseitigen Axial-Gleitlagersegmente 13 über einen Gleitkörper 15b, der in dem jeweiligen Segment 27 der Segmenthalterung 26 aufgenommen ist. Die Befestigung dieses Gleitkörpers 15b im jeweiligen Segment 27 erfolgt über eine einen Deckel 15d durchdringende Schraube 15c, wobei zwischen dem Gleitkörper 15b und dem Segment 27 der Segmenthalterung 26 eine Tellerfeder 15e positioniert ist.

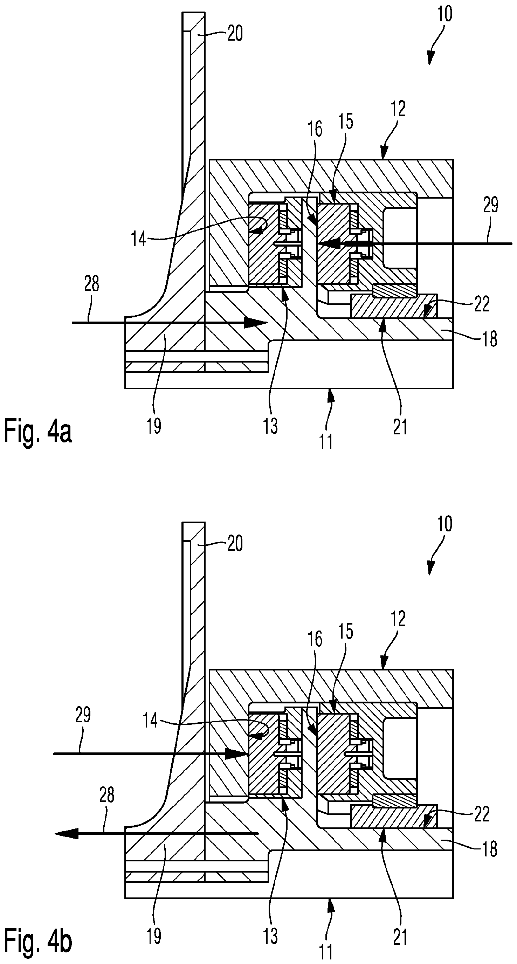

Fig. 4a und 4b zeigen den Ausschnitt der Fig. 2 mit Kraftpfeilen, wobei Kraftpfeile 28 jeweils eine Lagerbelastung und Kraftpfeile 29 jeweils eine Reaktionskraft visualisieren.

In Fig. 4a wirkt die Lagerbelastung 28 in einer ersten axialen Richtung, wobei dann die Reaktionskraft über die gehäuseseitigen Axial-Gleitlagersegmente 15 auf die Axial-Gleitfläche 16 des Rotors 11 wirkt. In Fig. 4b wirkt die Lagerbelastung 28 in einer entgegengesetzten Axialrichtung, die Reaktionskraft wirkt über die rotorseitigen Axial-Gleitlagersegmente 13 auf die Axial-Gleitfläche 14 des Gehäuses 12.

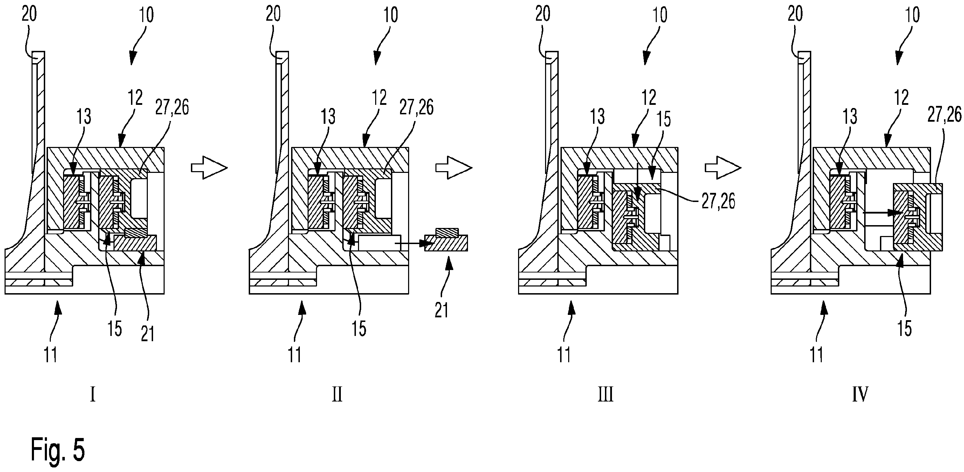

Fig. 5 verdeutlicht Details, die den Zugriff auf die gehäuseseitigen Gleitlagersegmente 15, 21 betreffen. Dann, wenn eines der gehäuseseitigen Axial-Gleitlagersegmente 15 aus der Lageranordnung 10 ausgebaut werden soll, ist zum Ausbau eines solchen gehäuseseitigen Axial-Gleitlagersegments 15 zunächst dasjenige gehäuseseitige Radial-Gleitlagersegment 21 vom Segment 27 der Segmenthalterung 26 demontierbar, welches zusammen mit dem auszubauenden gehäuseseitigen Axial-Gleitlagersegment 15 an dem jeweiligen Segment 27 der Segmenthalterung 26 montiert ist. Dies ist in Fig. 5 im Zustand II gezeigt. Nach der Demontage des jeweiligen gehäuseseitigen Radial-Gleitlagersegments 15 von dem jeweiligen Segment 27 der Segmenthalterung 26 ist das jeweilige Segment 27 der Segmenthalterung 26 vom Gehäuse 12 demontierbar und aus der Lageranordnung zusammen mit dem auszubauenden gehäuseseitigen Axial-Gleitlagersegment 15 entfernbar. Dies zeigen die Zustände III und IV der Fig. 5.

Auf die obige Art und Weise kann im Schadensfall der Lageranordnung 10 individuell auf einzelne gehäuseseitige Radial-Gleitlagersegmente 21 sowie einzelne gehäuseseitige Axial-Gleitlagersegmente 15 zugegriffen werden.

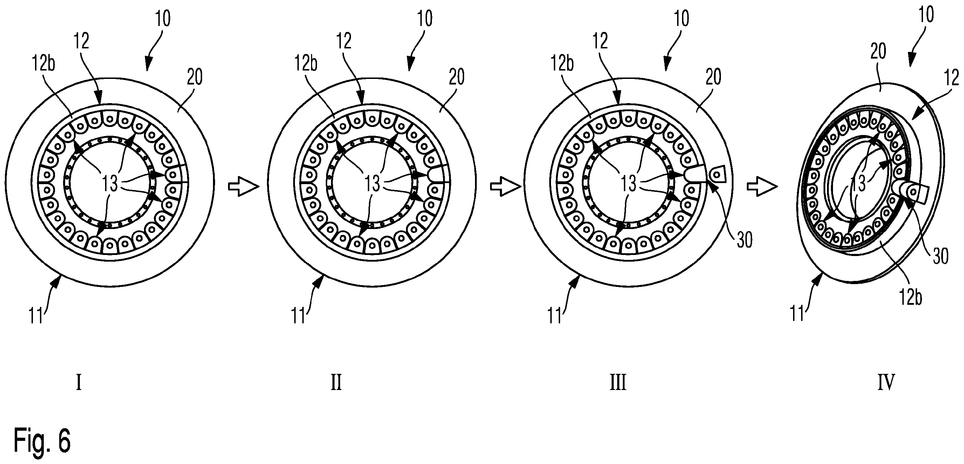

Fig. 6 zeigen Details, die dem Zugriff auf einzelne rotorseitige Axial-Gleitlagersegmente 13 der Lageranordnung 10 betreffen. In das Gehäuse 12, nämlich den Abschnitt 12b des Gehäuses 12, ist eine Montagelöffnung 30 eingebracht, über die ein einzelnes rotorseitiges Axial-Gleitsegment 16 nach Lösen der in Fig. 3 sichtbaren Befestigungsschrauben 15 aus der jeweiligen Aufnahmetasche 24 entfernt werden kann, und zwar in radialer Richtung. Durch Drehen des Rotors 11 kann das jeweilige rotorseitige Axial-Gleitsegment 13 in Überdeckung mit der Montagelöffnung 30 gebracht werden, das zu demontieren ist. Nach Demontage des gegebenenfalls defekten rotorseitigen Axial-Gleitlagersegments 13 kann dasselbe gegen ein neues rotorseitiges Axial-Gleitlagersegment 13 ersetzt werden, und zwar wiederum in radialer Richtung über die Einfädelöffnung 30.

Die erfindungsgemäße Lageranordnung 10 für den Rotor 11 einer Windkraftanlage kann einfach hergestellt, montiert und demontiert werden. Es kann auf einzelne Gleitlagersegmente individuell zugegriffen werden, sodass es im Schadensfall der Lageranordnung 10 nicht erforderlich ist, den Antriebsstrang komplett zu zerlegen bzw. die Windkraftanlage komplett zu demontieren. Die Gleitlagersegmente 13, 15 und 21 sind teils vom Gehäuse 12 und teils vom Rotor 11 getragen. Dieselben können individuell montiert und demontiert werden.

### Bezugszeichenliste

- 10: Lageranordnung
- 11: Rotor
- 12: Gehäuse
- 12a: Gehäuseabschnitt
- 12b: Gehäuseabschnitt
- 13: rotorseitiges Axial-Gleitlagersegment
- 13a: Halterung
- 13b: Gleitkörper
- 13c: Befestigungsschraube
- 13d: Deckel
- 13e: Tellerfeder
- 14: Gleitfläche
- 15: statorseitiges Axial-Gleitlagersegment
- 16: Gleitfläche
- 17: Vorsprung/ Spurscheibe
- 18: Welle
- 19: Nabe
- 20: Rotorblatt
- 21: statorseitiges Radial-Gleitlagersegmenten
- 22: Gleitfläche
- 23: Vorsprung
- 24: Aufnahmeraum
- 25: Befestigungsschraube
- 26: Segmenthalterung
- 27: Segment
- 28: Lagerbelastung
- 29: Reaktionskraft
- 30: Montageöffnung

## Patentansprüche

1. Lageranordnung (10) eines Rotors (11) einer Windkraftanlage, nämlich zur Lagerung des Rotors (11) in einem feststehenden Gehäuse (12), mit gehäuseseitigen Axial-Gleitlagersegmenten (15), die an dem Gehäuse (12) angreifen, zusammen mit dem Gehäuse (12) feststehen und sich gegen eine erste Gleitfläche (16) des Rotors (11) abstützen, mit gehäuseseitigen Radial-Gleitlagersegmenten (21), die an dem Gehäuse (12)) angreifen, zusammen mit dem Gehäuse (12) feststehen und sich gegen eine zweite Gleitfläche (22) des Rotors (11) abstützen, und mit weiteren Axial-Gleitlagersegmenten (13),
**dadurch gekennzeichnet,**
**dass** die weiteren Axial-Gleitlagersegmente (13) rotorseitig vorgesehen sind, am Rotor (11) angreifen, zusammen mit dem Rotor (11) rotieren und sich gegen eine Gleitfläche (14) des Gehäuses (12) abstützen,
und **dass** der Rotor (11) einen eine rotorseitige Spurscheibe ausbildenden radialen Vorsprung (17) aufweist,
der fest mit einer Nabe oder Welle (18) des Rotors verbunden ist,
wobei die rotorseitigen Axial-Gleitlagersegmente (13) an dem radialen Vorsprung (17) befestigt sind.

2. Lageranordnung nach Anspruch 1, **dadurch gekennzeichnet, dass** an dem radialen Vorsprung (17) des Rotors (11) axiale Vorsprünge (23) ausgebildet sind, die zusammen mit dem radialen Vorsprung (17) Aufnahmetaschen (24) für die rotorseitigen Axial-Gleitlagersegmenten (13) definieren.

3. Lageranordnung nach Anspruch 2, **dadurch gekennzeichnet, dass** sich die gehäuseseitigen Axial-Gleitlagersegmente (15) gegen die von der rotorseitigen Spurscheibe (17) bereitgestellte erste Gleitfläche (16) des Rotors (11) abstützen.

4. Lageranordnung nach einem der Ansprüche 1 bis 3, **dadurch gekennzeichnet, dass** sich die gehäuseseitigen Radial-Gleitlagersegmenten (15) gegen die von einer Nabe oder Welle des Rotors (11) bereitgestellte zweite Gleitfläche (22) des Rotors (11) abstützen.

5. Lageranordnung nach einem der Ansprüche 1 bis 4, **gekennzeichnet durch** eine gehäuseseitige Segmenthalterung (26), die sowohl die gehäuseseitigen Axial-Gleitlagersegmente (15) als auch die gehäuseseitigen Radial-Gleitlagersegmente (21) aufnimmt, wobei die Segmenthalterung (26) an dem Gehäuse (11) lösbar befestigt ist.

6. Lageranordnung nach Anspruch 5, **dadurch gekennzeichnet, dass** die Segmenthalterung (26) segmentiert ist, wobei jedes Segment (27) der Segmenthalterung (26) mindestens ein gehäuseseitiges Axial-Gleitlagersegment (15) und mindestens ein gehäuseseitiges Radial-Gleitlagersegment (21) aufnimmt.

7. Lageranordnung nach Anspruch 6, **dadurch gekennzeichnet, dass** die Anzahl der am jeweiligen Segment (27) der Segmenthalterung (26) aufgenommen gehäuseseitigen Axial-Gleitlagersegmente (15) der Anzahl der am jeweiligen Segment (27) der Segmenthalterung (26) aufgenommen gehäuseseitigen Radial-Gleitlagersegmente (21) entspricht.

8. Lageranordnung nach Anspruch 7, **dadurch gekennzeichnet, dass** jedes Segment (27) der Segmenthalterung (27) ein einziges gehäuseseitiges Axial-Gleitlagersegment (15) und ein einziges gehäuseseitiges Radial-Gleitlagersegment (21) aufnimmt.

9. Lageranordnung nach Anspruch 6, **dadurch gekennzeichnet, dass** die Anzahl der am jeweiligen Segment (27) der Segmenthalterung (26) aufgenommen gehäuseseitigen Axial-Gleitlagersegmente (15) von der Anzahl der am jeweiligen Segment (27) der Segmenthalterung (26) aufgenommen gehäuseseitigen Radial-Gleitlagersegment (21) abweicht.

10. Lageranordnung nach einem der Ansprüche 5 bis 9 **dadurch gekennzeichnet, dass** zum Ausbau eines gehäuseseitigen Axial-Gleitlagersegments (15) zunächst dasjenige gehäuseseitige Radial-Gleitlagersegment (21), das zusammen mit dem auszubauenden gehäuseseitigen Axial-Gleitlagersegment (15) an demselben Segment (27) der Segmenthalterung (26) montiert ist, vom jeweiligen Segment (27) der Segmenthalterung (26) demontierbar ist, und dass anschließend das jeweilige Segment (27) der Segmenthalterung (26) vom Gehäuse (12) demontierbar und zusammen mit dem auszubauenden gehäuseseitigen Axial-Gleitlagersegment (15) ausbaubar ist.

11. Lageranordnung nach einem der Ansprüche 1 bis 10, **dadurch gekennzeichnet, dass** an dem Gehäuse (12) eine Einfädelöffnung (30) für die rotorseitigen Axial-Gleitlagersegmente (13) ausgebildet ist, über welche die rotorseitigen Axial-Gleitlagersegmente (13) montierbar und demontierbar sind.

## Claims

1. A bearing assembly (10) of a rotor (11) of a wind turbine, namely for mounting the rotor (11) in a fixed housing (12), having housing-side axial slide bearing segments (15), which engage on the housing (12), are fixed together with the housing (12) and are supported against a first sliding surface (16) of the rotor (11), having housing-side radial slide bearing segments (21), which engage on the housing (12), are fixed together with the housing (12) and are supported against a second sliding surface (22) of the rotor (11), and having additional axial slide bearing segments (13), **characterized in that** the additional axial slide bearing segments (13) are rotor-side axial slide bearing segments (13), which engage on the rotor (11), rotate together with the rotor (11) and are supported against a sliding surface (14) of the housing (12) , and that the rotor (11) comprises a radial projection (17) forming a rotor-side thrust collar which is secured to a hub or shaft (18) of the rotor (11), wherein the rotor-side axial slide bearing segments (13) are fastened to the radial projection (17).

2. The bearing assembly according to Claim 1, **characterized in that** on the radial projection (17) of the rotor (11) axial projections (23) are formed, which together with the radial projection (17) define receiving pockets (24) for the rotor-side axial slide bearing segments (13).

3. The bearing assembly according to Claim 2, **characterized in that** the housing-side axial slide bearing segments (15) are supported against the first sliding surface (16) of the rotor (11) provided by the rotor-side thrust collar (17).

4. The bearing assembly according to any one of the Claims 1 to 3, **characterized in that** the housing-side radial slide bearing segments (15) are supported against the second sliding surface (22) of the rotor (11) provided by a hub or shaft of the rotor (11).

5. The bearing assembly according to any one of the Claims 1 to 4, **characterized by** a housing-side segment holder (26), which receives both the housing-side axial slide bearing segments (15) and also the housing-side radial slide bearing segments (21), wherein the segment holder (26) is detachably fastened to the housing (11).

6. The bearing assembly according to Claim 5, **characterized in that** the segment holder (26) is segmented, wherein each segment (27) of the segment holder (26) receives at least one housing-side axial slide bearing segment (15) and at least one housing-side radial slide bearing segment (21).

7. The bearing assembly according to Claim 6, **characterized in that** the number of the housing-side axial slide bearing segments (15) received on the respective segment (27) of the segment holder (26) corresponds to the number of the housing-side radial slide bearing segments (21) received on the respective segment (27) of the segment holder (26).

8. The bearing assembly according to Claim 7, **characterized in that** each segment (27) of the segment holder (27) receives a single housing-side axial slide bearing segment (15) and a single housing-side radial slide bearing segment (21).

9. The bearing assembly according to Claim 6, **characterized in that** the number of the housing-side axial slide bearing segments (15) received on the respective segment (27) of the segment holder (26) deviates from the number of the housing-side radial slide bearing segments (21) received on the respective segment (27) of the segment holder (26).

10. The bearing assembly according to any one of the Claims 5 to 9, **characterized in that** for removing a housing-side axial slide bearing segment (15) that housing-side radial slide bearing segment (21), which together with the housing-side axial slide bearing segment (15) to the removed is mounted on the same segment (27) of the segment holder (26) is initially demountable from the respective segment (27) of the segment holder (26), and **in that** following this the respective segment (27) of the segment holder (26) is demountable from the housing (12) and removable together with the housing-side axial slide bearing segment (15) to be removed.

11. The bearing assembly according to any one of the Claims 1 to 10, **characterized in that** on the housing (12) a threading opening (30) for the rotor-side axial slide bearing segments (13) is formed, via which the rotor-side axial slide bearing segments (13) are mountable and demountable.

## Revendications

1. Ensemble de palier (10) d'un rotor (11) d'une éolienne, à savoir pour le logement du rotor (11) dans un carter (12) stationnaire, pourvu de segments axiaux (15) de palier lisse côté carter, qui s'engagent sur le carter (12), sont stationnaires conjointement avec le carter (12) et s'appuient contre une première surface de glissement (16) du rotor (11), pourvu de segments radiaux (21) de palier lisse côté carter, qui s'engagent sur le carter (12), sont stationnaires conjointement avec le carter (12) et s'appuient contre une deuxième surface de glissement (22) du rotor (11), et pourvu de segments axiaux (13) de palier lisse supplémentaires,
**caractérisé en ce que**
les segments axiaux (13) de palier lisse supplémentaires sont prévus du côté rotor, s'engagent sur le rotor (11), tournent conjointement avec le rotor (11) et s'appuient contre une surface de glissement (14) du carter (12),
et **en ce que** le rotor (11) comporte une saillie (17) radiale constituant un disque traceur côté rotor ,
qui est solidement assemblée avec un moyeu ou arbre (18) du rotor,
les segments axiaux (13) de palier lisse côté rotor étant fixés sur la saillie (17) radiale.

2. Ensemble de palier selon la revendication 1, **caractérisé en ce que** sur la saillie (17) radiale du rotor (11) sont conçues des saillies (23) axiales, qui conjointement avec la saillie (17) radiale définissent des poches de logement (24) pour les segments axiaux (13) de palier lisse côté rotor.

3. Ensemble de palier selon la revendication 2, **caractérisé en ce que** les segments axiaux (15) de palier lisse côté carter s'appuient contre la première surface de glissement (16) du rotor (11) mise à disposition par le disque traceur (17).

4. Ensemble de palier selon l'une quelconque des revendications 1 à 3, **caractérisé en ce que** les segments radiaux (15) de palier lisse côté carter s'appuient contre la deuxième surface de glissement (22) du rotor (11) mise à disposition par un moyeu ou un arbre du rotor (11).

5. Ensemble de palier selon l'une quelconque des revendications 1 à 4, **caractérisé par** un support de segment (26) côté carter, qui reçoit aussi bien les segments axiaux (15) de palier lisse côté carter qu'également les segments radiaux (21) de palier lisse côté carter, le support de segment (26) étant fixé de manière amovible sur le carter (11).

6. Ensemble de palier selon la revendication 5, **caractérisé en ce que** le support de segment (26) est segmenté, chaque segment (27) du support de segment (26) recevant au moins un segment axial (15) de palier lisse côté carter et au moins un segment radial (21) de palier lisse côté carter.

7. Ensemble de palier selon la revendication 6, **caractérisé en ce que** le nombre des segments axiaux (15) de palier lisse côté carter reçus sur le segment (27) concerné du support de segment (26) correspond au nombre des segments radiaux (21) de palier lisse côté carter reçus sur le segment (27) concerné du support de segment (26).

8. Ensemble de palier selon la revendication 7, **caractérisé en ce que** chaque segment (27) du support de segment (27) reçoit un unique segment axial (15) de palier lisse côté carter et un unique segment radial (21) de palier lisse côté carter.

9. Ensemble de palier selon la revendication 6, **caractérisé en ce que** le nombre des segments axiaux (15) de palier lisse côté carter reçus sur le segment (27) concerné du support de segment (26) diffère du nombre des segments radiaux (21) de palier lisse côté carter reçus sur le segment (27) concerné du support de segment (26).

10. Ensemble de palier selon l'une quelconque des revendications 5 à 9, **caractérisé en ce que** pour retirer un segment axial de palier lisse (15) côté carter, dans un premier temps, le segment radial (21) de palier lisse côté carter qui, conjointement avec le segment axial (15) de palier lisse côté carter qui doit être retiré est monté sur le même segment (27) du support de segment (26) est démontable du segment (27) concerné du support de segment (26), et **en ce que** par la suite, le segment (27) concerné du support de segment (26) est démontable du carter (12) et peut se retirer conjointement avec le segment axial (15) de palier lisse côté carter qui doit être retiré.

11. Ensemble de palier selon l'une quelconque des revendications 1 à 10, **caractérisé en ce que** sur le carter (12) est conçu un orifice d'introduction (30) pour les segments axiaux (13) de palier lisse côté rotor, par l'intermédiaire duquel les segments axiaux (13) de palier lisse côté rotor sont montables et démontables.
